(19) Europäisches Patentamt / European Patent Office / Office européen des brevets

(11) **EP 3 278 675 B1**

(12) **EUROPEAN PATENT SPECIFICATION**

(45) Date of publication and mention
of the grant of the patent:
**21.04.2021 Bulletin 2021/16**

(51) Int Cl.:
*A23K 50/10* (2016.01)     *A23K 10/30* (2016.01)
*A23K 20/163* (2016.01)     *A23K 30/20* (2016.01)

(21) Application number: **16773130.6**

(86) International application number:
**PCT/JP2016/060695**

(22) Date of filing: **31.03.2016**

(87) International publication number:
**WO 2016/159250 (06.10.2016 Gazette 2016/40)**

(54) **RUMINANT FEED**

FUTTER FÜR WIEDERKÄUER

ALIMENTS POUR RUMINANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2015 JP 2015074032**

(43) Date of publication of application:
**07.02.2018 Bulletin 2018/06**

(73) Proprietor: **Nippon Paper Industries Co., Ltd. Tokyo 114-0002 (JP)**

(72) Inventors:
• **IIMORI, Takeshi**
  **Tokyo 114-0002 (JP)**
• **KUROSU, Kazuhiro**
  **Tokyo 114-0002 (JP)**
• **MINOHARA, Taisuke**
  **Tokyo 114-0002 (JP)**

(74) Representative: **Carpmaels & Ransford LLP One Southampton Row London WC1B 5HA (GB)**

(56) References cited:
WO-A1-2013/152771     GB-A- 2 092 877
JP-A- 2011 083 281     JP-A- 2011 083 281
JP-A- 2013 518 880     JP-A- 2015 198 653
JP-A- 2015 509 373

• D. S. CROY ET AL: "NUTRITIVE VALUE OF PULP MILL FIBER WASTE FOR RUMINANTS", CANADIAN JOURNAL OF ANIMAL SCIENCE., vol. 68, no. 2, 1 June 1988 (1988-06-01), pages 461-470, XP055506392, CA ISSN: 0008-3984, DOI: 10.4141/cjas88-052

EP 3 278 675 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to feedstuffs for ruminants.

BACKGROUND ART

Generally in the field of livestock farming, concentrate feedstuffs of high nutritional value are often used in combination with roughage feedstuffs such as forages in order to increase milk production or to increase weight gain in livestock.

Concentrate feedstuffs are rich in easily digestible carbohydrates (starch and the like) such as corn, while roughage feedstuffs mainly include dried forages (hay, straw), early harvested and fermented (i.e., ensiled) forages and the like.

Ruminants can ingest and digest roughage feedstuffs because they have a rumen (first stomach). The rumen occupies the largest volume among the multiple stomachs of ruminants, and contains much microorganisms (i.e., ruminal microorganisms) capable of degrading hard-to-digest polysaccharides such as celluloses and hemicelluloses in roughage feedstuffs (i.e., ruminal fermentation).

However, celluloses and hemicelluloses in roughage feedstuffs are often bound to lignins and exist as lignin-cellulose complexes and lignin-hemicellulose complexes, respectively. Such complexes may not be degraded sufficiently via ruminal fermentation so that roughage feedstuffs had the problem that they tended to be insufficient in feed efficiency. Moreover, an increase in undigested materials was considered to be environmentally undesirable because it leads to an increase in feces.

Furthermore, some forages contain much nitrate nitrogen, and ruminants having ingested them may suffer from various types of nitrite poisoning. Nitrite poisoning occurs when nitrous acid produced *in vivo* from nitrate nitrogen in ingested forages combines with the oxygen carrier hemoglobin in the blood to impede hemoglobin from accepting oxygen. Severe cases of nitrite poisoning cause asphyxia, which may result in sudden death of ruminants or a decrease in milk production or the like symptoms in dairy cattle.

In addition, the supply of roughage feedstuffs is unstable because it is susceptible to the harvest yield or crop yield of forages. Especially, Japan mostly relies on imported roughage feedstuffs, which are generally subject to significant price variation or may be difficult to import depending on circumstances in exporting countries, thereby putting a squeeze on livestock farmers.

In this regard, Croy et al, Canadian Journal of Animal Science, 68(2), 1988, pp461-470, discloses experiments carried out to determine the feeding value of pulp fiber waste.

WO 2013/152771 discloses a method for processing a biomass (for example straw) containing lignocellulose such that cellulose and hemicellulose are made accessible for further processing, typically by decomposition, without needing energy-consuming dissolution of the biomass in water.

GB 2 092 877 discloses a feedstuff for ruminants, comprising agricultural matter and up to 60 % spent sugarbeet pulp.

Thus, it would be desirable to provide inexpensive and stably available feedstuffs for ruminants as alternative to forages, that achieve a high feed efficiency and are not responsible for diseases such as nitrite poisoning.

In this connection, concentrate feedstuffs rich in easily digestible carbohydrates (starch) are typically combined with roughage feedstuffs to increase the nutrient levels in feedstuffs. To maintain milk production in dairy livestock or to maintain weight gain in livestock for meat, feed intake must also be increased because the rate of increase in the energy required to increase milk production or weight gain exceeds the rate of increase in feed intake. However, carbohydrates such as starch in concentrate feedstuffs may cause a sudden drop of pH in the first stomach (rumen), resulting in ruminal acidosis. Ruminal acidosis is one of ruminant diseases caused by a sudden intake of grains, concentrate feedstuffs, fruits or the like rich in carbohydrates. Ruminal acidosis is characterized by the growth of gram-positive lactate-producing bacteria, especially *Streptococcus bovis* and microorganisms of the genus *Lactobacillus* and the abnormal accumulation of lactic acid or volatile fatty acids (VFAs) in the rumen, whereby the ruminal pH drops (to 5 or less). This results in a decrease or disappearance of protozoa and certain types of bacteria in the rumen. In particular, acute acidosis is very critical because it leads to congestion of the rumen or dehydration (a shift of a lot of body fluids into the stomach as a result of an increases in the osmotic pressure in the stomach lumen), finally coma or death.

To prevent ruminal acidosis, it is important to avoid sudden changes in feed formulations, thereby stabilizing ruminal fermentation and reducing pH variations. It is also important to provide feedstuffs that stimulate adequate rumination to promote salivation because saliva contains sodium bicarbonate contributing to pH adjustment. However, feedstuffs having a low nutritional value in fear of ruminal acidosis may cause a lack of energy and a decrease in milk production.

Feedstuffs for preventing ruminal acidosis are disclosed in patent literature 1, which describes powdery/particulate molasses feedstuffs consisting of a mixture containing 5 to 60 parts by weight of waste molasses per 100 parts by weight of beet pulp. On the other hand, patent literature 2 discloses feedstuffs for ruminants comprising 80 % by weight or more of a cellulose and/or hemicellulose on a dry solids basis, while patent literature 3 discloses livestock feedstuffs obtained by applying a high impact force to a wood raw material to break up it into microparticles.

CITATION LIST

PATENT LITERATURES

PTL 1: JPA2006-174796

PTL 2: JPA2011-082381

PTL 3: JPA2012-105570

SUMMARY OF INVENTION

TECHNICAL PROBLEM

However, the powdery/particulate molasses feedstuffs of patent literature 1 consisting of a mixture of beet pulp and waste molasses described above were not sufficient in feed efficiency such as digestibility. On the other hand, the feedstuffs described in patent literature 2 or patent literature 3 were poor in the effect of stimulating the first stomach (rumen) of ruminant livestock to promote rumination (mechanical effect) and inferior in feeding preference

Thus, the present invention aims to provide a technique for preparing feedstuffs for ruminants with high nutritional value or feed efficiency. Especially, the present invention aims to provide feedstuffs having a high mechanical effect for promoting rumination without causing ruminal acidosis while they also have the economic advantages that they can be stably supplied at low cost without any possibility of adverse influence such as nitrite poisoning when compared with forages. Further, the present invention also aims to develop those feedstuffs for which ruminants show high preference.

SOLUTION TO PROBLEM

As a result of careful studies about the problems described above, the inventors of the present invention accomplished the present invention on the basis of the finding that the problems described above can be surprisingly solved by subjecting a pulp suspension of a lignocellulosic material in a liquid to solid-liquid separation.

(1) A process for preparing a feedstuff for ruminants, comprising: suspending a lignocellulosic material as a raw material in a liquid to give a pulp; subjecting the resulting pulp to solid-liquid separation in a pressure type solid-liquid separator; pelletizing the pulp subject to solid-liquid separation and preparing a feedstuff containing the pelletized pulp, wherein the lignocellulose material is derived from a wood resource and the pulp is a kraft pulp.

(2) The process of (1) wherein the pulp has a water content of 45 % by mass or more and less than 80 % by mass after it has been processed in a solid-liquid separator.

(3) The process of (1) or (2) wherein the solid-liquid separator is a screw press and/or filter press.

(4) The process of any one of (1) to (3), further comprising drying the pulp processed in a solid-liquid separator to a water content of 15 % or less.

(5) The process of any one of (1) to (4), comprising solid-liquid separation in multiple stages using a solid-liquid separator.

(6) The process of (5), comprising a first stage of solid-liquid separation until the water content of the pulp reaches 50 to 75 % by mass.

(7) The process of any one of (1) to (4), comprising solid-liquid separation using a paper machine or pulp machine.

(8) The process of (7) wherein the pulp subjected to solid-liquid separation using a paper machine or pulp machine has a water content of 15 to 35 % by mass.

(9) The process of any of (1) to (8) wherein the pelletized pulp has a water content of 15 % by mass or less.

(10) The process of any of (1) to (9) wherein the pulp has a water content of 15 to 30 % by mass before it has been pelletized.

ADVANTAGEOUS EFFECTS OF INVENTION

The present invention makes it possible to obtain feedstuffs for which ruminants show high preference and having the effect of stimulating the first stomach (rumen) of ruminant livestock to promote rumination (mechanical effect). Especially, the feedstuffs made by the process of the present invention can prevent ruminal acidosis or nitrite poisoning or the like because the amount of conventional concentrate feedstuffs or forages used can be reduced. Further, the feedstuffs for ruminants according to the process of the present invention can be stably supplied at low cost because they can be prepared from plant raw materials such as wood. In addition, they also have high transportability.

DESCRIPTION OF EMBODIMENTS

The feedstuffs for ruminants according to the process of the present invention are applied to ruminants. Ruminants include, for example, cattle such as dairy cattle and beef cattle, sheep, goats and the like. The time when ruminants are fed with the feedstuffs of the present invention, i.e., the age, size, health condition or the like of the ruminants to be fed is not specifically limited, and may be from suckling calves having finished the period during which they are fed with a milk replacer to adult cattle.

The feedstuffs for ruminants according to the process of the present invention comprise a pulp prepared from a lignocellulosic raw material and processed in a solid-liquid separator. The present invention comprises the steps of pulping a lignocellulosic raw material in a liquid, then washing the resulting pulp with water and dewatering it, wherein the pulp used in the present invention is controlled at a water content in a pressure type solid-liquid separator during the dewatering step. The water content here is preferably 45 % by mass or more and less than 80 % by mass. If the water content is less than 45 % by mass, water is excessively removed and molded products obtained from the pulp become so hard that digestibility decreases. If the water content is 80 % by mass or more, the pulp cannot be molded and transportability decreases. It should be noted that the water content may be controlled to less than 80 % by mass in a solid-liquid separator and then further lowered by air drying.

Further, preferred embodiments of the present invention can comprise solid-liquid separation in multiple stages using a solid-liquid separator. An illustrative embodiment can comprise a first stage of solid-liquid separation during which the water content (moisture content) of the pulp reaches 50 to 75 % by mass, or a first stage of solid-liquid separation during which the water content may be lowered to 55 to 70 % by mass or 60 to 65 % by mass.

Pressure type solid-liquid separators that can preferably be used include screw presses, filter presses and the like, which are typically also used as washers during pulp producing processes.

Alternatively, the present invention can comprise solid-liquid separation using a paper machine or pulp machine. For example, the water content of the pulp can be adjusted to 15 to 35 % by mass during solid-liquid separation using a paper machine, or the water content of the pulp may be lowered to 16 to 30 % by mass or 17 to 25 % by mass by using a paper machine. In this connection, the pulp subjected to solid-liquid separation using a paper machine or pulp machine can be a pulp sheet having a basis weight of 100 to 2000 $g/cm^3$. Typically, a paper machine or pulp machine comprises a wire part, a press part, and a dryer part, wherein a pulp suspension is suppled to an endless wire to form a pulp sheet in the wire part, then the pulp sheet is transported on a press felt and further dewatered through a press nip in the press part, and the pulp sheet is dried while it is transported on a canvas in the dryer part.

The feedstuffs for ruminants according to the process of the present invention use kraft pulps. Chemical pulps include kraft pulp (KP) and dissolving kraft pulp (DKP).

In the feedstuffs for ruminants according to the process of the present invention, the pulp may consist of a single pulp or may be a mixture of multiple kraft pulps. For example, a mixture of two or more of chemical pulps (hardwood kraft pulp, softwood kraft pulp, dissolving hardwood kraft pulp, dissolving softwood kraft pulp)

Wood raw materials that can be used include, for example, hardwoods, softwoods, trysting trees, bamboo, kenaf, bagas and empty fruit brunches obtained after palm oil extraction. Specifically, examples of hardwoods include *Fagus crenata, Tilia japonica, Betula platyphylla, Populus, Eucalyptus, Acacia,* oaks, *Acer pictum* subsp. *mono, Kalopanax septemlobus,* elms, *Paulownia tomentosa, Mangolia obovata,* willows, *Kalopanax pictus* Nakai, *Quercus phillyraeoides, Quercus serrata, Quercus acutissima, Aesculus turbinata, Zelkova serrata, Betula grossa, Cornus controversa, Fraxinus lanuginosa* f. *serrata* and the like. Examples of softwoods include *Cryptomeria japonica, Picea jezoensis, Larix kaempferi, Pinus thunbergii, Abies Sachalinensis, Pinus parviflora* var. *parviflora, Taxus cuspidata, Thuja standishii, Picea torano, Picea alcokiana, Podocarpus macrophyllus, Abies firma, Chamaecyparis pisifera, Pseudotsuga japonica, Thujopsis dolabrata, Thujopsis dolabrata* var. *hondae, Tsuga sieboldii, Tsuga diversifolia, Chamaecyparis obtusa, Taxus cuspidata, Cephalotaxus harringtonia, Piceajezoensis* var. *hondoensis,* yellow cedar (*Cupressus nootkatensis*), Lawson's cypress (*Chamaecyparis lawsoniana*), Douglas fir (*Pseudotsuga menziesii*), Sitka spruce (*Picea sitchensis*), *Pinus radiata,* eastern spruce, eastern white pine, western larch, western fir, western hemlock, *Larix occidentalis* and the like.

Kraft pulp

The pulp in the process of the present invention comprises a kraft pulp, especially preferably a wood-derived kraft pulp. Further, the pulp in the process of the present invention preferably has a kappa number of 5 or more and less than 15, and preferably comprises an oxygen-delignified kraft pulp.

For preparing a kraft pulp from wood chips, the wood chips are fed into a digester together with a cooking liquor and subjected to kraft cooking. Alternatively, they may be subjected to a modified kraft cooking process such as MCC, EMCC, ITC, Lo-solids or the like process. Further, the cooking system is not specifically limited, including one-vessel liquor phase, one-vessel steam/liquor phase, two-vessel liquor/steam phase, two-vessel liquor phase or the like system. Thus, the step of impregnating wood chips with an aqueous alkaline solution and holding them described herein may be provided separately from conventional equipment or sites intended for penetration of cooking liquors. Preferably, the unbleached cooked pulp is washed in a washer such as a diffusion washer after the cooking liquor has been extracted.

The kraft cooking process can be performed by loading a pressure vessel with pre-hydrolyzed wood chips and a kraft cooking liquor wherein the shape or size of the vessel is not specifically limited. The ratio of the chemical liquid to the wood chips can be, for example, 1.0 to 5.0 L/kg, preferably 1.5 to 4.5 L/kg, more preferably 2.0 to 4.0 L/kg.

In the present invention, an alkaline cooking liquor containing 0.01 to 1.5 % by mass of a quinone compound based on the bone dry weight of the chips may be added to the digester. If the amount of the quinone compound added is less than 0.01 % by mass, it is too little to reduce the kappa number of the pulp after cooking so that the relationship between the kappa number and the pulp yield cannot be improved. Moreover, reduction of residues and reduction in viscosity loss are also insufficient. Even if the amount of the quinone compound added exceeds 1.5 % by mass, however, neither further reduction in the kappa number of the pulp after cooking nor improvement in the relationship between the kappa number and the pulp yield is observed.

The quinone compound used is a quinone compound, hydroquinone compound or a precursor thereof known as the so-called digestion aid, and at least one compound selected from these members can be used. These compounds include, for example, quinone compounds such as anthraquinones, dihydroanthraquinones (e.g., 1,4-dihydroanthraquinone), tetrahydroanthraquinones (e.g., 1,4,4a,9a-tetrahydroanthraquinone, 1,2,3,4-tetrahydroanthraquinone), methylanthraquinones (e.g., 1-methylanthraquinone, 2-methylanthraquinone), methyldihydroanthraquinones (e.g., 2-methyl-1,4-dihydroanthraquinone), and methyltetrahydroanthraquinones (e.g., 1-methyl-1,4,4a,9a-tetrahydroanthraquinone, 2-methyl-1,4,4a,9a-tetrahydroanthraquinone); hydroquinone compounds such as anthrahydroquinones (typically 9,10-dihydroxyanthracene), methylanthrahydroquinones (e.g., 2-methylanthrahydroquinone), dihydroanthrahydroanthraquinones (e.g., 1,4-dihydro-9,10-dihydroxyanthracene) or alkali metal salts thereof (e.g., the disodium salt of an anthrahydroquinone, the disodium salt of 1,4-dihydro-9,10-dihydroxyanthracene); and their precursors such as anthrones, anthranols, methylanthrones, and methylanthranols. These precursors can be converted into quinone compounds or hydroquinone compounds under cooking conditions.

The cooking liquor preferably has an active alkali charge (AA) of 16 to 22 % by mass based on the bone dry weight of wood chips when the wood chips are derived from softwoods. If the active alkali charge is less than 16 % by mass, lignins or hemicelluloses are not sufficiently removed, but if it exceeds 22 % by mass, the yield decreases or the quality decreases. As used herein, the active alkali charge refers to the total charge of NaOH and $Na_2S$, expressed as the charge of $Na_2O$ obtained by multiplying the charge of NaOH by 0.775 and the charge of $Na_2S$ by 0.795 to convert them into the corresponding charges of $Na_2O$. Further, it preferably has a sulfidity in the range of 20 to 35 %. If the sulfidity is in the range of less than 20 %, delignification slows down, the pulp viscosity decreases, and the residue content increases.

The kraft cooking process preferably takes place in the temperature range of 120 to 180 °C, more preferably 140 to 160 °C. If the temperature is too low, delignification

(reduction in kappa number) is insufficient, but if the temperature is too high, the degree of polymerization (viscosity) of celluloses decreases. As used herein, the cooking time refers to a time period after the cooking temperature reaches the maximum temperature before the temperature begin to drop, and preferably ranges from 60 minutes or more to 600 minutes or less, more preferably 120 minutes or more to 360 minutes or less. If the cooking time is shorter than 60 minutes, pulping does not proceed, but if it exceeds 600 minutes, the pulp production efficiency decreases, and therefore, either case is not preferred.

In the kraft cooking process according to the present invention, the process temperature and the process time can be selected based on the H-factor (Hf). The H-factor is an indicator of the total amount of heat given to a reaction system during cooking and expressed by the equation below. The H-factor is calculated by integration over time from the instant when chips and water are mixed to the end of cooking.

$$Hf = \int \exp\left(43.20 - 16113/T\right) dt$$

wherein T represents the absolute temperature at a given instant.

In the present invention, the unbleached pulp obtained after cooking can be subjected to various processes, as appropriate. For example, the unbleached pulp obtained after kraft cooking can be subjected to a bleaching process.

The pulp obtained after kraft cooking can be subjected to an oxygen delignification process. A known medium consistency method or high consistency method can be directly applied for the oxygen delignification process used in the present invention. Preferably, the medium consistency method is performed at a pulp consistency of 8 to 15 % by mass, and the high consistency method is performed at 20 to 35 % by mass. Alkalis that can be used in the oxygen delignification process include sodium hydroxide and potassium hydroxide, and oxygen gases that can be used include oxygen from cryogenic separation, oxygen from PSA (Pressure Swing Adsorption), oxygen from VSA (Vacuum Swing Adsorption) and the like.

Reaction conditions for the oxygen delignification process include, but are not specifically limited to, an oxygen pressure of 3 to 9 $kg/cm^2$, more preferably 4 to 7 $kg/cm^2$, an alkali charge of 0.5 to 4 % by mass, a temperature of 80 to 140 °C, a process time of 20 to 180 minutes, and other known conditions. It should be noted that the oxygen delignification process may be performed multiple times in the present invention.

When the kappa number is to be further reduced or the brightness is to be further improved, the oxygen-delignified pulp is then sent to, for example, a washing step in which it is washed, and then sent to a multistage bleaching step in which it can be subjected to a multistage bleaching process. The multistage bleaching process in the present invention preferably includes, but not specifically limited to, the use of a known bleaching agent such as an acid (A), chlorine dioxide (D), an alkali (E), oxygen (O), hydrogen peroxide (P), ozone (Z), a peracid or the like in combination with a bleaching aid. For example, a multistage bleaching sequence is preferably used, comprising a first stage using a chlorine dioxide bleaching stage (D) or an ozone bleaching stage (Z), a second stage using an alkali extraction stage (E) or a hydrogen peroxide stage (P), and a third and the subsequent stages using chlorine dioxide or hydrogen peroxide. The number of stages subsequent to the second stage is not specifically limited either, but the total number of stages is preferably at most three or four to avoid adverse effects on energy efficiency, productivity and the like.

Further, a chelating agent treatment stage using ethylenediaminetetraacetic acid (EDTA), diethylenetriaminepentaacetic acid (DTPA) or the like may be inserted into the multistage bleaching process.

The feedstuffs for ruminants according to the process of the present invention may have a pulp content of 100 %, but may also contain other feedstuff components to improve nutrition or feeding preference. In the latter case, the pulp content is preferably 80 % by weight or more, more preferably 90 % by weight or more based on the total solids content of the feedstuffs. Other feedstuff components include roughage feedstuffs (e.g., forages), concentrate feedstuffs (e.g., grains such as corn and wheat, beans such as soybean), wheat bran, rice bran, soy pulp, proteins, fats, vitamins, minerals and the like as well as additives (preservatives, colorants, perfumes, etc.) and the like. These other feedstuff components may be mixed with pulp during compression molding.

The feedstuffs for ruminants according to the process of the present invention preferably have a water content of 15 % by mass or less. When the water content is 15 % by mass or less, transportability is improved whereby microbial corrosion can be reduced.

In the present invention, the pulp subjected to solid-liquid separation is pelletized. Pelletization improves transportability, thereby providing easy-to-handle feedstuffs. In preferred embodiments, the pelletized pulp has a water content of 15 % by mass or less, whereby microbial corrosion can be readily reduced even after long-term storage. Further in preferred embodiments, the water content of the pulp before pelletization is 15 to 30 % by mass, more preferably 16 to 25 % by mass. If the water content is in such a range, the pulp can be easily pelletized and an efficient process is achieved because the pulp can be dried by the heat used for pelletization.

EXAMPLES

The following examples further illustrate the present invention, but the present invention is not limited to these examples. It should be noted that the % values as used herein are based on weight unless otherwise specified, and the numerical ranges are described to include their endpoints.

Experiment 1: Preparation of feedstuffs using pulps as raw materials

< Comparative Sample 1-1: Compressed kraft pulp>

Eucalyptus wood chips were used to prepare a kraft pulp in a liquid. First, eucalyptus wood chips (in an amount equivalent to 300 g on a bone dry basis) were subjected to kraft cooking in an autoclave under the conditions: an active alkali charge of 13.0 %, a sulfidity of 25 %, and an H-factor of 830, to give an unbleached kraft pulp (kappa number: 16.7, brightness: 30.3%). The pulp was washed with tap water and then centrifuged to remove water, thereby giving a pulp having a consistency of 30 %.

The resulting kraft pulp was adjusted to a consistency of 10 %, and then subjected to oxygen delignification under the conditions: an $O_2$ charge of 18 kg/t and a sodium hydroxide charge of 23 kg/t, at 100 °C for 90 minutes to give an oxygen-delignified pulp (kappa number: 8.5, ISO brightness: 49.3%). The resulting pulp was washed with tap water until it reached pH 8.0 or less, and then centrifuged to remove water. This was followed by disintegration to give an oxygen-delignified pulp having a pulp consistency of 20.6%.

The resulting oxygen-delignified pulp was subjected to solid-liquid separation by compression in a screw press to give a compressed kraft pulp having a water content of 72.1 %.

This compressed kraft pulp was placed in a rectangular tray (external dimensions: 255 mm x 320 mm x 63 mm) and air-dried until the weight variation from day to day reached less than 1 % to give a pulp having a water content of 7.1 % (Comparative Sample 1-1).

<Sample 1-2: Pelletized oxygen-delignified pulp >

The compressed pulp described above was pelletized using a pellet press (a semi-dry continuous pelletization machine from TIGER-CHIYODA MACHINERY CO., LTD.) (9 mm in diameter x 15 mm in length), and then air-dried to give pulp pellets having a water content of 7.0 % (Sample 1-2).

< Comparative Sample 1-3: Unmolded oxygen-delignified pulp>

The uncompressed oxygen-delignified pulp described above was directly air-dried to a water content of 7.1 % (Comparative Sample 1-3).

< Comparative Sample 1-4: Unbleached kraft pulp dewatered in two stages>

The unbleached kraft pulp described above (having a consistency of about 10 %) was dewatered to a water content of 62.1 % using a factory equipment belt press, and then dewatered to a water content of 26.9 % using a screw press (model SHX-200 from FUKOKU KOGYO CO., LTD.) (Comparative Sample 1-4).

< Comparative Sample 1-5: Unbleached kraft pulp processed in a paper machine>

The unbleached kraft pulp described above was adjusted to a consistency of 3 % in a dissolving pulper, and then converted into a sheet in a small paper machine. The papermaking process comprises a wire part, a press part, and a dryer part so that a sheet having a water content of 17.7%, and a basis weight of 123.5 g/cm$^2$ was obtained by adjusting the number of passages through a drum roller controlled at a temperature of about 100 °C in the dryer part. A 10 x 10 mm square piece was cut from the resulting sheet to prepare a feedstuff sample (Comparative Sample 1-5).

<Sample 1-6: Air-dried and then pelletized unbleached kraft pulp>

The unbleached kraft pulp described above was air-dried to a water content of 17.9 % and this pulp was molded into pellets using a pelletizer from CPM to give pulp pellets having a water content of 13.9 % (Sample 1-6).

Experiment 2: Determination of the degree of saccharification

A feedstuff sample obtained in Experiment 1 (compressed kraft pulp, 400 mg on an air-dry basis) was precisely weighed into a resin sample vial (having a volume of 50 ml). Into the vial was added 45 ml of a suspension containing 0.1 % of cellulase, pH4.8 (brand name: 102321 Cellulase Onozuka R-10 from Merck & Co.) to saccharify the sample at 45 °C for 48 hours.

After 2 hours, 4 hours, 8 hours, 24 hours, and 48 hours, the sample was collected and the proportion of the pulp saccharified (the degree of saccharification by cellulase) was determined. Specifically, the sample was filtered on a filter paper preliminarily weighed after drying to a constant mass, washed with water four times, and then dried in an air circulation dryer at 135 °C for 2 hours, and the dry solids weight of the residue was determined.

The degree of saccharification by cellulase highly correlates with digestibility in ruminants, and feedstuffs having higher degrees of saccharification are thought to be more easily digestible in ruminants. As shown in Table 1, Comparative Sample 1-1 (compressed kraft pulp) exhibited a higher degree of saccharification and a higher saccharification rate as compared with Sample 1-2 (pelletized oxygen-delignified pulp) and an almost similar degree of saccharification as compared with Comparative Sample 1-3 (unmolded oxygen-delignified pulp). Comparative Sample 1-4 (oxygen-delignified pulp dewatered in two stages) and Comparative Sample 1-5 (oxygen-delignified pulp converted into paper) exhibited almost similar degrees of saccharification to that of Comparative Sample 1-1.

[Table 1]

Table 1

| | Time (h) | | | | | |
|---|---|---|---|---|---|---|
| | 0 | 2 | 4 | 8 | 24 | 48 |
| Sample 1-1* | 0.0 | 17.1 | 26.3 | 48.5 | 65.2 | 78.5 |
| Sample 1-2 | 0.0 | 17.9 | 26.9 | 49.3 | 62.8 | 67.3 |
| Sample 1-3* | 0.0 | 15.9 | 24.4 | 42.6 | 69.3 | 80.2 |
| Sample 1-4* | 0.0 | 16.8 | 27.1 | 47.5 | 66.3 | 78.2 |
| Sample 1-5* | 0.0 | 15.3 | 24.5 | 43.2 | 61.8 | 75.4 |
| Sample 1-6 | 0.0 | 16.5 | 25.8 | 46.2 | 63.4 | 68.5 |
| * = Comparative | | | | | | |

Experiment 3: *In situ* evaluation of digestibility

The samples prepared in Experiment 1 and commercially available feedstuffs (steam-flaked corn and bermudagrass hay) were analyzed for digestibility in the rumen by an *in situ* method (Nocek 1988).

Into the rumen of a test animal (a dairy cow) were inserted polyester bags (#R1020, polyester, 10 cm x 20 cm, average pore diameter $50\pm15$ $\mu$m, ANKOM Technology Corp., Fairport, NY, USA) containing 5 g of each sample such as Comparative Sample 1-1 (compressed kraft pulp processed in a screw press) weighed on an air-dry basis. At 2 hours, 4 hours, 8 hours, 24 hours and 48 hours after the polyester bags were inserted, they were removed from the rumen, and washed with water, and dried to a constant mass at 60 °C to determine the dry solids weight. The same polyester bags containing each feedstuff were prepared except that they were not inserted into the rumen but simply washed with water, and used as samples at a degradation time of 0 hour. Each sample was measured on three different successive days.

The test results of each sample are shown in Table 2. As shown in Table 2, the pulp of Comparative Sample 1-1 exhibited a digestibility higher than that of bermudagrass hay. Moreover, the pulp of Comparative Sample 1-1 was digested more slowly than steam-flaked corn, suggesting that it functions to inhibit sudden degradation and fermentation in the rumen.

[Table 2]

Table 2.Evaluation of digestibility in the rumen

| | Time (h) | | | | | |
|---|---|---|---|---|---|---|
| | 0 | 2 | 4 | 8 | 24 | 48 |
| Sample 1-1* | 0.0 | 1.2 | 6.4 | 10.2 | 35.6 | 82.1 |
| Sample 1-2 | 0.0 | 0.0 | 3.5 | 6.2 | 26.7 | 76.5 |
| Sample 1-3* | 0.0 | 0.0 | 5.7 | 10.5 | 39.1 | 87.3 |
| Sample 1-4* | 0.0 | 1.0 | 6.1 | 10.4 | 34.2 | 80.2 |
| Sample 1-5* | 0.0 | 0.4 | 2.8 | 8.4 | 30.1 | 75.3 |
| Sample 1-6 | 0.0 | 0.0 | 3.2 | 5.8 | 27.1 | 77.1 |
| Steam-flaked corn | 0.0 | 40.5 | 47.2 | 57.2 | 77.6 | 94.8 |
| Bermudagrass hay | 0.0 | 23.5 | 25.4 | 30.2 | 46.7 | 61.3 |
| * = Comparative | | | | | | |

Experiment 4: Feeding preference test

Four dairy cows (designated as A, B, C, and D) were allowed free access to 300 g (on an air-dry basis) of the feedstuffs prepared in Experiment 1 (Comparative Sample 1-1, Sample 1-2, and Comparative Sample 1-3) for 5 minutes. They were fed at 7:00 a.m., and a feeding preference test was performed three times in which the feedstuffs were placed at different positions each time.

As shown in the table below, Comparative Sample 1-1 exhibited a similar consumption to that of Comparative Sample 1-3. However, Sample 1-2 (pellets) was inferior to Comparative Sample 1-1 and Comparative Sample 1-3 in consumption probably because the animals may not be used to eating it.

[Table 3]

Table 3

|  | A | B | C | D | Average |
|---|---|---|---|---|---|
| Sample 1-1* | 187 | 204 | 201 | 176 | 192 |
| Sample 1-2 | 102 | 94 | 54 | 62 | 78 |
| Sample 1-3* | 214 | 184 | 195 | 203 | 199 |
| * = Comparative | | | | | |

Experiment 5: Determination of volumetric weight

The samples of Experiment 1 were dried to a constant mass at 105 °C. Then, the weight and the volume were measured to determine the volumetric weight.

As shown in the table below, Comparative Sample 1-1 (compressed kraft pulp) had a volumetric weight about 2.5 times higher than that of Comparative Sample 1-3, indicating that it has good transportability. Further, Comparative Sample 1-4 and Comparative Sample 1-5 also have high transportability because they have volumetric weights increased by solid-liquid separation.

[Table 4]

Table 4

|  | Volumetric weight (g/L) |
|---|---|
| Sample 1-1* | 354 |
| Sample 1-2 | 623 |
| Sample 1-3* | 145 |
| Sample 1-4* | 368 |
| Sample 1-5* | 530 |
| Sample 1-6 | 667 |
| * - Comparative | |

The oxygen-delignified pulp compressed in a screw press according to the present invention (compressed kraft pulp) exhibited a digestibility and a digestion rate almost comparable to those of the unmolded oxygen-delignified pulp. Further, it tended to have a higher digestibility than that of the pelletized oxygen-delignified pulp. This may be probably because it has not been compression-molded as in the case of pellets and therefore, it is more rapidly soaked with digestive fluids. Moreover, the feedstuff had a higher bulk density and greatly improved transportability via a compression process using a solid-liquid separator. Consequently, the feedstuff of the process of the present invention was excellent in digestibility, transportability, and consumption.

## Claims

1. A process for preparing a feedstuff for ruminants, comprising: suspending a lignocellulosic material as a raw material in a liquid to give a pulp; subjecting the resulting pulp to solid-liquid separation in a pressure type solid-liquid separator; pelletizing the pulp subjected to solid-liquid separation and preparing a feedstuff containing the pelletized pulp; wherein the lignocellulosic material is derived from a wood resource and the pulp is a kraft pulp.

2. The process of claim 1 wherein the pulp has a water content of 45 % by mass or more and less than 80 % by mass after it has been processed in a solid-liquid separator.

3. The process of claim 1 or claim 2 wherein the solid-liquid separator is a screw press and/or filter press.

4. The process of any one of claims 1 to 3, further comprising drying the pulp processed in a solid-liquid separator to a water content of 15 % or less.

5. The process of any one of claims 1 to 4, comprising solid-liquid separation in multiple stages using a solid-liquid separator.

6. The process of claim 5, comprising a first stage of solid-liquid separation until the water content of the pulp reaches 50 to 75 % by mass.

7. The process of any one of claims 1 to 4, comprising solid-liquid separation using a paper machine or pulp machine.

8. The process of claim 7 wherein the pulp subjected to solid-liquid separation using a paper machine or pulp machine has a water content of 15 to 35 % by mass.

9. The process of any one of claims 1 to 8 wherein the pelletized pulp has a water content of 15 % by mass or less.

10. The process of any one of claims 1 to 9 wherein the pulp has a water content of 15 to 30 % by mass before it has been pelletized.


## Patentansprüche

1. Verfahren zur Herstellung eines Futtermittels für Wiederkäuer, bei dem man: einen lignocellulosehaltigen Stoff als Ausgangsstoff zum Erhalt eines Zellstoffs in einer Flüssigkeit suspendiert; den entstandenen Zellstoff in einer Fest-Flüssig-Trennvorrichtung vom Drucktyp einer Fest-Flüssig-Trennung unterwirft; den der Fest-Flüssig-Trennung unterworfenen Zellstoff pelletiert und ein den pelletierten Zellstoff enthaltenes Futtermittel herstellt; wobei der lignocellulosehaltige Stoff aus einer Holzquelle stammt und es sich bei dem Zellstoff um Zellstoff aus einem Kraft-Aufschluss handelt.

2. Verfahren nach Anspruch 1, bei dem der Zellstoff, nachdem er in einer Fest-Flüssig-Trennvorrichtung verarbeitet wurde, einen Wassergehalt von 45 Massen-% oder mehr und weniger als 80 Massen-% aufweist.

3. Verfahren nach Anspruch 1 oder Anspruch 2, bei dem es sich bei der Fest-Flüssig-Trennvorrichtung um eine Schneckenpresse und/oder eine Filterpresse handelt.

4. Verfahren nach einem der Ansprüche 1 bis 3, bei dem man den in einer Fest-Flüssig-Trennvorrichtung verarbeiteten Zellstoff ferner auf einen Wassergehalt von 15 % oder weniger trocknet.

5. Verfahren nach einem der Ansprüche 1 bis 4, das eine Fest-Flüssig-Trennung in mehreren Stufen unter Verwendung einer Fest-Flüssig-Trennvorrichtung umfasst.

6. Verfahren nach Anspruch 5, das eine erste Stufe einer Fest-Flüssig-Trennung umfasst, bis der Wassergehalt des Zellstoffs 50 bis 75 Massen-% erreicht.

7. Verfahren nach einem der Ansprüche 1 bis 4, das eine Fest-Flüssig-Trennung unter Verwendung einer Papiermaschine oder einer Zellstoffmaschine umfasst.

8. Verfahren nach Anspruch 7, bei dem der einer Fest-Flüssig-Trennung unter Verwendung einer Papiermaschine oder einer Zellstoffmaschine unterworfene Zellstoff einen Wassergehalt von 15 bis 35 Massen-% aufweist.

9. Verfahren nach einem der Ansprüche 1 bis 8, bei dem der pelletierte Zellstoff einen Wassergehalt von 15 Massen-% oder weniger aufweist.

10. Verfahren nach einem der Ansprüche 1 bis 9, bei dem der Zellstoff einen Wassergehalt von 15 bis 30 Massen-% aufweist, bevor er pelletiert wurde.

**Revendications**

1. Procédé pour la préparation d'un aliment pour ruminants, comprenant : la mise en suspension d'une matière lignocellulosique en tant qu'une matière première dans un liquide pour donner une pâte ; la soumission de la pâte résultante à une séparation solide-liquide dans un séparateur solide-liquide de type à pression ; la mise en pastilles de la pâte soumise à une séparation solide-liquide et la préparation d'un aliment contenant la pâte mise en pastilles ; la matière lignocellulosique étant issue d'une ressource en bois et la pâte étant de la pâte kraft.

2. Procédé selon la revendication 1, la pâte possédant une teneur en eau de 45 % en masse ou plus et de moins de 80 % en masse après qu'elle a été traitée dans un séparateur solide-liquide.

3. Procédé selon la revendication 1 ou la revendication 2, le séparateur solide-liquide étant une presse à vis et/ou une presse à filtre.

4. Procédé selon l'une quelconque des revendications 1 à 3, comprenant en outre le séchage de la pâte traitée dans un séparateur solide-liquide jusqu'à une teneur en eau de 15 % ou moins.

5. Procédé selon l'une quelconque des revendications 1 à 4, comprenant une séparation solide-liquide en plusieurs stades à l'aide d'un séparateur solide-liquide.

6. Procédé selon la revendication 5, comprenant un premier stade de séparation solide-liquide jusqu'à ce que la teneur en eau de la pâte atteigne 50 à 75 % en masse.

7. Procédé selon l'une quelconque des revendications 1 à 4, comprenant une séparation solide-liquide à l'aide d'une machine à papier ou d'une machine à pâte.

8. Procédé selon la revendication 7, la pâte soumise à une séparation solide-liquide à l'aide d'une machine à papier ou d'une machine à pâte possédant une teneur en eau de 15 à 35 % en masse.

9. Procédé selon l'une quelconque des revendications 1 à 8, la pâte mise en pastilles possédant une teneur en eau de 15 % en masse ou moins.

10. Procédé selon l'une quelconque des revendications 1 à 9, la pâte possédant une teneur en eau de 15 à 30 % en masse avant d'avoir été mise en pastilles.

**REFERENCES CITED IN THE DESCRIPTION**

**Patent documents cited in the description**

- WO 2013152771 A
- GB 2092877 A

**Non-patent literature cited in the description**

- **CROY et al.** *Canadian Journal of Animal Science,* 1988, vol. 68 (2), 461-470